**Europäisches Patentamt**

**European Patent Office**

**Office européen des brevets**

(19)

(11) Veröffentlichungsnummer: **0 009 018**
**B1**

# (12) EUROPÄISCHE PATENTSCHRIFT

(45) Veröffentlichungstag der Patentschrift:
**16.06.82**

(51) Int. Cl.³: **B 29 H  17/24,** B 29 H  17/00

(21) Anmeldenummer: **79890030.4**

(22) Anmeldetag: **07.09.79**

(54) **Verfahren zur Herstellung von Pneumatikreifen.**

(30) Priorität: **08.09.78  AT 6520/78**
**25.05.79  AT 3843/79**

(43) Veröffentlichungstag der Anmeldung:
**19.03.80 Patentblatt 80/6**

(45) Bekanntmachung des Hinweises auf die Patenterteilung:
**16.06.82 Patentblatt 82/24**

(84) Benannte Vertragsstaaten:
**BE CH DE FR GB IT NL SE**

(56) Entgegenhaltungen:
**DE-B-1 301 045**
**FR-A-1 570 764**
**FR-A-2 001 404**
**FR-A-2 001 405**
**FR-A-2 244 619**
**GB-A-  730 878**
**US-A-1 328 006**
**US-A-2 860 379**
**US-A-2 925 623**

(73) Patentinhaber: **POLYAIR MASCHINENBAU Ges.m.b.h.,**
**A-2421 Kittsee/Bgld. (AT)**

(72) Erfinder: **Schmidt, Oskar, Chicago 5, A-2421 Kittsee (AT)**
Erfinder: **Kubica, Wladyslaw, Weyrgasse 6/11,**
**A-1030 Wien (AT)**

(74) Vertreter: **Kretschmer, Adolf, Dipl.-Ing.,**
**Schottengasse 3a, A-1014 Wien (AT)**

## Verfahren zur Herstellung von Pneumatikreifen

Die Erfindung bezieht sich auf ein Verfahren zur Herstellung von Pneumatikreifen aus Kunststoffelastomeren, insbesondere aus Polyurethan, mit einem Reifeninnenkörper, einer über Wulstkerne im Reifen verankerten Karakasse, einer Gurteinlage und einem Reifenaussenkörper mit einer Laufflüche. Der wesentliche Bestandteil von Pneumatikreifenkonstruktionen ist die Karakasse einschliesslich des Gurtes, welche als Armierung bei Pneumatikreifen die Aufgabe erfüllen soll, den Innendruck des Reifens und die Verformung bei Betriebsbeanspruchungen ohne unzulässige Verformung des Reifens aufzufangen.

Bisher ist es allgemein üblich, die Karkasse der Pneumatikreifen aus Kordbändern zu fertigen, welche aus beiderseitig mit Gummi oder gummiartigen Elastomeren beschichteten Faser- bzw. Stahlkordbahnen auf die benötigte Breite in Querrichtung geschnitten und nachher zu Bändern, nunmehr mit geändertem Verlauf der Kordrichtung, durch Verkleben zusammengeheftet sind. Im Reifen erfolgt die Verankerung der Bänder durch Umschlagen und Verkleben der Schnittränder dieser Bänder über die sogenannten Wulstkerne, welche im Reifen für diesen Zweck als Konstruktionsbestandteil beiderseitig vorgesehen sind. Die nach diesem Verfahren hergestellten Reifen weisen den Nachteil auf, dass an den Seitenwänden im Bereich der über die Wulstkerne umgeschlagenen Schnittränder der Kordbänder, bei Überlastung oder bei Verlust des Innenluftdruckes Auflösungen und auch ernsthafte Beschädigungen entstehen können.

Aus der DE-B-1'301 045 ist bereits ein Verfahren zur Herstellung eines Reifens bekannt geworden, bei welchem Fäden über eine zylindrische Kernoberfläche zwischen den den Kernumfang mit radialem Abstand konzentrisch umschliessenden Wülsten frei gespannt werden. Bei dieser Ausbildung ergibt sich eine innere und eine äussere Lage der Fäden relativ zur Achse des Kerns. Bei einer nachfolgenden Bombierung wird die äussere Lage in grösserem Ausmass in Richtung der Peripherie des Reifens beansprucht als die innere Lage, so dass die beiden Lagen eine unterschiedliche Spannung aufweisen. Diese unterschiedliche Spannung hat zur Folge, dass lediglich die äussere Lage zur Stabilisierung des Reifens beiträgt, wobei die innere Lage Ballast darstellt.

Die Erfindung zielt nun darauf ab, ein Verfahren zur Herstellung von Pneumatikreifen der eingangs genannten Art zu schaffen, bei welchem die Karkasse lediglich in einer gewölbten Ebene liegend Zugarmierungen aufweist, deren Spannung weitgehend gleich ist. Insbesondere soll durch das erfindungsgemässe Verfahren die Karkasse unabhängig von der jeweiligen Reifendimension ein einfacher und besonders wirtschaftlicher Weise herstellbar sein und besonderen Erfordernissen in Bezug auf die Stabilität der Armierung in einfachster Weise Rechnung tragen. Zur Lösung dieser Aufgabe besteht die Erfindung im wesentlichen darin, dass die Karkasse durch Wickeln von Kord oder Seil radial von einem Wulstkern zum anderen Wulstkern über die Peripherie eines Formkerns in Abstand von der Oberfläche des Formkerns unter abwechselndem Verankern des Kordes oder Seiles an wenigstens einem der zu beiden Seiten des Reifens angeordneten Wulstkerne durch vollständige Umschlingung derselben ausgebildet wird, wobei das Seil oder Kord um den jeweiligen Wulstkern unter Ausbildung einer Schlinge herumgeführt wird, und das jeweils in Abstand von der Oberfläche des Formkernes über die Peripherie desselben geführte Seil oder Kord unter Ausbildung einer neuen Schlinge durch die zuvor gebildete benachbarte Schlinge nach Art des Häkelns hindurchgeführt und mit dem jeweiligen Wulstkern verbunden wird, dass eine in Umfangsrichtung verlaufende Gurteinlage aufgebracht und dass anschliessend der Reifenaussenkörper und die Lauffläche aufgebracht wird. Um die Karkasse in Abstand von der Innenwand des Reifens anordnen zu können, kann entweder zunächst ein Reifeninnenkörper gefertigt werden, über welchen die Karkasse in der Folge gewickelt wird, oder aber ein Formkern vorgesehen sein, welcher durch geeignete Abstandhalter wie beispielsweise Rippen ein Wickeln der Karkasse in Abstand von der später gebildeten Reifeninnenwand ermöglicht. Bei dieser zweiten Variante kann der Reifenaussenkörper und der Reifeninnenkörper gemeinsam in einem Spritz- oder Giessvorgang hergestellt werden. Der in einem ersten Arbeitsgang gefertigte Reifeninnenkörper kann in bevorzugter Weise gleichfalls an seiner Aussenseite Erhebungen, insbesondere ringförmige Erhebungen, aufweisen, welche nach Aufbringen der Radialarmierung eine bessere Durchflutung und damit bessere Verankerung der Karkasse beim Spritzen oder Giessen bewirken. Dadurch, dass die Karkasse durch Wickeln von Kord oder Seil von einem Wulstkern zum anderen Wulstkern über die Peripherie des Reifeninnenkörpers unter abwechselndem Verankern des Kordes oder Seiles an wenigstens einem der zu beiden Seiten des Reifens angeordneten Wulstkerne durch vollständige Umschlingung derselben ausgebildet wird, wird erreicht, dass jeder Teilabschnitt des Kordes oder Seiles jeweils an den beiden Wulstkernen sicher verankert ist. Die vollständige Umschlingung der Wulstkerne gewährleistet, dass jeder Teilbereich der Karkasse unter gleicher Vorspannung steht und daher die gesamte Karkasse gleichmässig die Verformung aufnehmen kann. Diese gleichmässige Vorspannung wird vor allen Dingen dadurch erreicht, dass das Kord oder Seil um den jeweiligen Wulstkern unter Ausbildung einer Schlinge herumgeführt wird, und das jeweils in Abstand von der Oberfläche des Formkernes über die Peripherie desselben geführte Seil oder Kord unter Ausbildung einer neuen Schlinge durch die zuvor gebildete benachbarte Schlinge nach Art des Häkelns hindurchgeführt und mit dem jeweiligen Wulstkern verbunden wird. Auf diese Weise wird sichergestellt, dass das Kord oder Seil lediglich in einer gewölbten Ebene in gleichem Radialabstand von der Achse des Formkernes bzw. der Umhüllenden der Lauffläche angeordnet ist, so dass zusätzliche innere Spannungen vermieden werden. Im Zusammenhang mit der in Umfangsrichtung verlaufenden Gurteinlage, welche selbst wiederum durch Aufwickeln von Seil oder Kord in Umfangsrichtung hergestellt werden kann, können die gewünschten Stabilitätserfordernisse in einfacher und wirtschaftlicher Weise verschiedenen Anwendungsgebieten und Reifendimensionen angepasst werden. Es ist lediglich eine der gewünschten Reifendimension entsprechende Form mit einem Formkern erforderlich und die Armierung kann in weiten Bereichen durch Wahl des Abstandes benachbarter Armierungslagen variiert werden. Die Festlegung des Seiles oder Kordes am Wulstkern nach Art eines Häkelverfahrens ermöglicht eine rasche und wirtschaftliche Herstellung der Karkasse, welche frei von den Nachteilen konventioneller Karkassen, welche sich durch die bei solchen Karkassen erforderliche Verklebung ergeben, ist. Die Festigkeitseigenschaften der Karkasse sind lediglich durch die Dimensionierung und die Wahl der Abstände der Seil- bzw. Kordlagen gegeben, wobei eine Verklebung entfällt.

In besonders einfacher Weise erfolgt die Verankerung des Kordes oder Seiles an dem Wulstkern in der Weise, dass das Seil oder das Kord zur Erzielung einer Radialarmierung unter konstanter Spannung von einem Wulstkern zum anderen in einem Abstand von der Oberfläche des Formkernes oder über die Peripherie des Reifeninnenkörpers geführt und der Formkern bzw. der Reifeninnenkörper nach jeder Verankerung des Seiles oder Kordes an den jeweiligen Wulstkern in Umfangsrichtung vorgeschoben wird.

Um die gewünschte vollständige Umschlingung der Wulstkerne in einfacher Weise zu ermöglichen, werden vorzugsweise die Wulstkerne in einem Abstand von der Aussenfläche des Reifeninnenkörpers gehalten. Hiezu können über den Umfang des Reifeninnenkörpers verteilt Abstandhalter vorgesehen sein, oder aber beispielsweise an der Form eine Halteeinrichtung für die Wulstkerne vorgesehen sein. Die Abstandhalter an der Aussenseite des Reifeninnenkörpers können hiebei jeweils nach dem Herumführen des Seiles oder Kordes entfernt werden, wobei die gewünschte Spannung des Seiles oder Kordes genau festgelegt werden kann. Die Wulstkerne können hiefür nach dem Einbringen der Radialarmierung beispielsweise durch Seile oder Drähte am Umfang des Reifeninnenkörpers verankert werden, um ihre Lage in der Gussform zu sichern. Es können aber selbstverständlich auch in der Aussenform entsprechende mit dem Wulstkern zusammenwirkende Teile vorgesehen sein, welche eine Sicherung der Wulstkerne unter Gewährleistung der gewünschten Vorspannung der Radialarmierung ermöglichen.

Anstelle der Verwendung von Abstandhaltern kann bei der Herstellung von Reifen, bei welchen der Innenkörper seitlich in einem Bereich mit grösserem Radius als dem des Bereiches der Anordnung der Wulstkerne über die Aufnahmestelle des Wulstkernes vorgewölbt ist, erfindungsgemäss so vorgegangen werden, dass wenigstens ein Wulstkern zunächst in einem Abstand von der Aussenfläche des Innenkörpers angeordnet wird, in welchem die kürzeste Verbindung über die Peripherie des Reifeninnenkörpers zum anderen Wulstkern gleich lang ist wie die kürzeste Verbindung der Wulstkerne über die Peripherie des Reifeninnenkörpers im an der Aussenseite des Reifeninnenkörpers festgelegten Zustand derselben, und dass hierauf die Wulstkerne nach Umschliessen durch das Seil oder Kord an der Aussenseite des Reifeninnenkörpers festgelegt werden. Eine derartige Anordnung der Wulstkerne erlaubt es, die Spannung des Seiles oder Kordes in einer Lage im Abstand von der Aussenfläche des Reifeninnenkörpers einzustellen und diese Spannung entspricht dann genau der Spannung, die nach dem Festlegen der Wulstkerne an der Aussenseite des Reifeninnenkörpers auftreten soll. Durch diesen grossen Abstand zwischen Reifeninnenkörper und Wulstkern können auch Spulen mit dem aufgewickelten Seil oder Kord um den Wulstkern herumgeführt werden und es wird auch der Einsatz einfacher Maschinen zu diesem Zweck möglich.

Gemäss einer weiteren bevorzugten Ausführungsform des erfindungsgemässen Verfahrens wird so vorgegangen, dass das Seil oder Kord ausgehend von einem Wulstkern unter Ausbildung einer Schlinge zum anderen Wulstkern geführt wird, dass die Schlinge um den anderen Wulstkern herumgeführt und ein freies Ende des Seiles oder Kordes unter Ausbildung eines Knotens durch die Schlinge hindurchgesteckt wird und dass dieses Verfahren bis zur Rückkehr an den Ausgangspunkt über den Umfang des Wulstkernes durchgeführt wird, worauf gegebenenfalls vorstehende Enden des Seiles oder Kordes abgeschnitten werden. Auf diese Weisen werden mit jedem Schritt parallel zueinander und quer zur Umfangsrichtung verlaufende Seile oder Korde aufgebracht. Der Umfang des Kordes oder Seiles wird in diesem Fall zuerst an einem Wulstkern derart festgebunden, dass ein freies Ende einer Länge, welche etwa dem doppelten Umfang des Wulstkernes entspricht, verbleibt. Das Kord oder das Seil wird über den Reifeninnenkörper von diesem Wulstkern zum anderen Wulstkern geführt und über diesen unter Schleifenbildung zurück zum ersten Wulstkern geführt. Die zurückgeführte Schleife des Kordes oder Seiles wird um den ersten Wulstkern mit dem freien Ende des Kordes oder Seiles unter Knotenbildung befestigt. Der zweite Teil der Kord- bzw. Seilschleife wird wiederum über den Reifeninnenkörper geführt und dort unter Schleifenbildung über den Wulstkern herumgeführt und zum ersten Wulstkern zurückgeführt. Der zweite Wulstkern kann hiebei abwechselnd von aussen nach innen und von innen nach aussen umgriffen werden. Die zum ersten Wulstkern zurückgeführte Schleife wird wiederum unter Vermittlung des freien Endes verknotet und auf diese Weise am Wulstkern befestigt. Der Vorgang wird über den gesamten Umfang des Reifeninnenkörpers wiederholt und die Enden des Seiles oder Kordes werden nach der letzten Knotenbildung abgeschnitten. Der beschriebene Vorgang ist vom Tapezieren von Polstermöbeln her prinzipiell bekannt.

Als Material für das Seil oder Kord kommen Kunstfaser- oder Stahldrähte, beispielsweise Polyamide, in Frage.

Für die geeignete Positionierung der in Umfangsrichtung verlaufenden Armierung können Abstandhalter vorgesehen sein, welche die gewünschte Lage der Gurteinlage im Reifen gewährleisten.

Die Abstandhalter können ein die Gurteinlage zumindest teilweise umschliessendes Querschnittsprofil aufweisen, welches einseitig eine Öffnung für das Einlegen der Gurteinlage aufweist. In diesem Fall muss die Gurteinlage durch die Abstandhalter nicht gespannt werden, da die gewünschte Lage der Gurteinlage durch die umschliessenden Teilbereiche des Abstandhalters gesichert wird. Die Abstandhalter können hiebei so ausgebildet sein, dass die Breite des Steges, bzw. die lichte Breite des die Gurteinlage aufnehmenden Querschnittsprofiles für die Aufnahme einer Gurteinlage von einer Breite von wenigstens 10% der Breite der Lauffläche des Reifens, vorzugsweise aber höchstens 50% dieser Breite, bemessen ist. Auf diese Weise wird den Erfordernissen für eine geeignete Armierung eines in einem Arbeitsgang gegossenen bzw. gespritzten Reifens in besonders günstiger Weise Rechnung getragen. Vorzugsweise beträgt der Abstand der Auflagestellen der Gurteinlage an den Stegen von der Innenform ungefähr 50% der geringsten Wandstärke der Lauffläche des Reifens. Bei einem derartig armierten Reifen wird auf diese Weise gleichsam eine im wesentlichen gleichbleibende Wandstärke aufweisende Karkasse geschaffen, an welche die gegossene oder gespritze, aus dem gleichen Material bestehende Lauffläche anschliesst.

Als Kunststoffe für die Herstellung des erfindungsgemässen Fahrzeugreifens kommen neben dem bevorzugt genannten Polyurethan auch 6,6-Polyamide, PVC, Polyäthylene oder dgl. bzw. spritz- oder giessbare Gummimischungen in Frage, wobei die Verwendbarkeit dieser Kunststoffe sich vor allem durch die entsprechende Armierung ergibt.

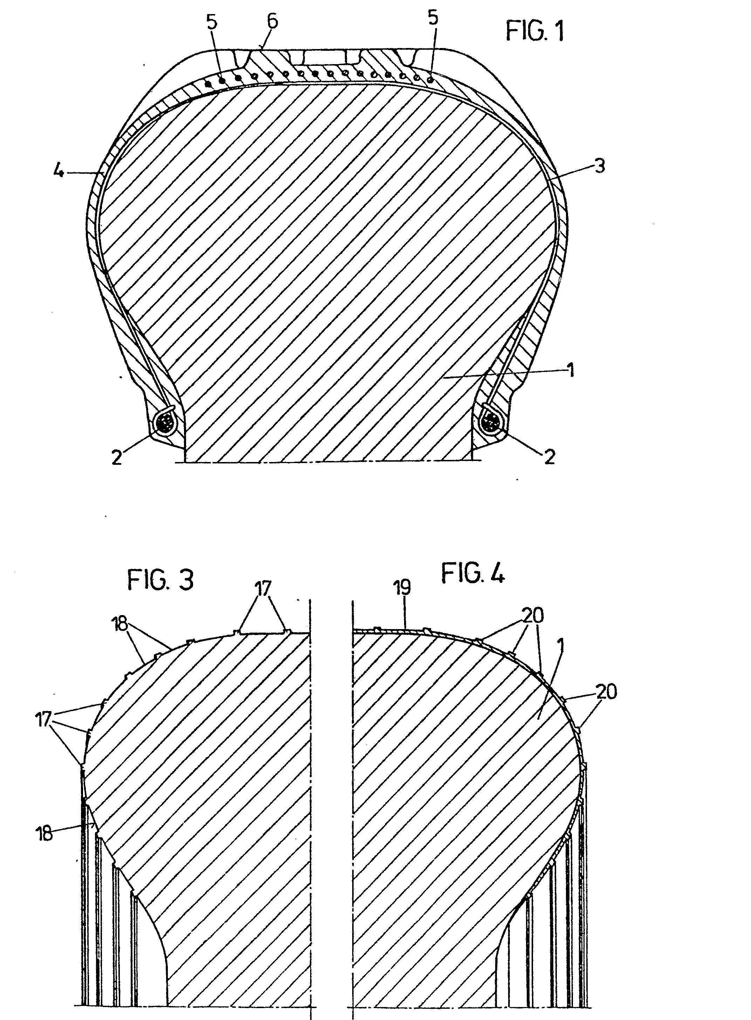

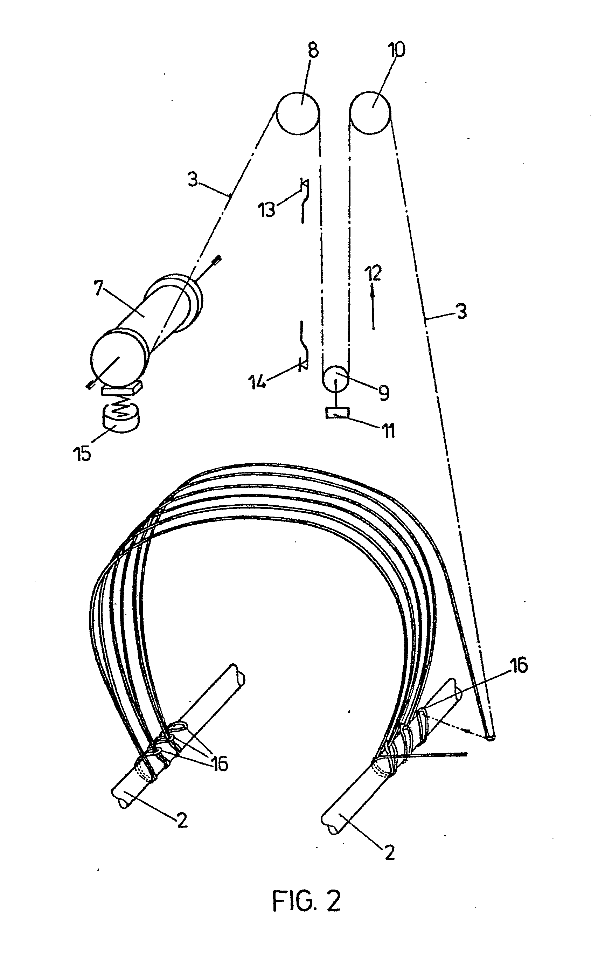

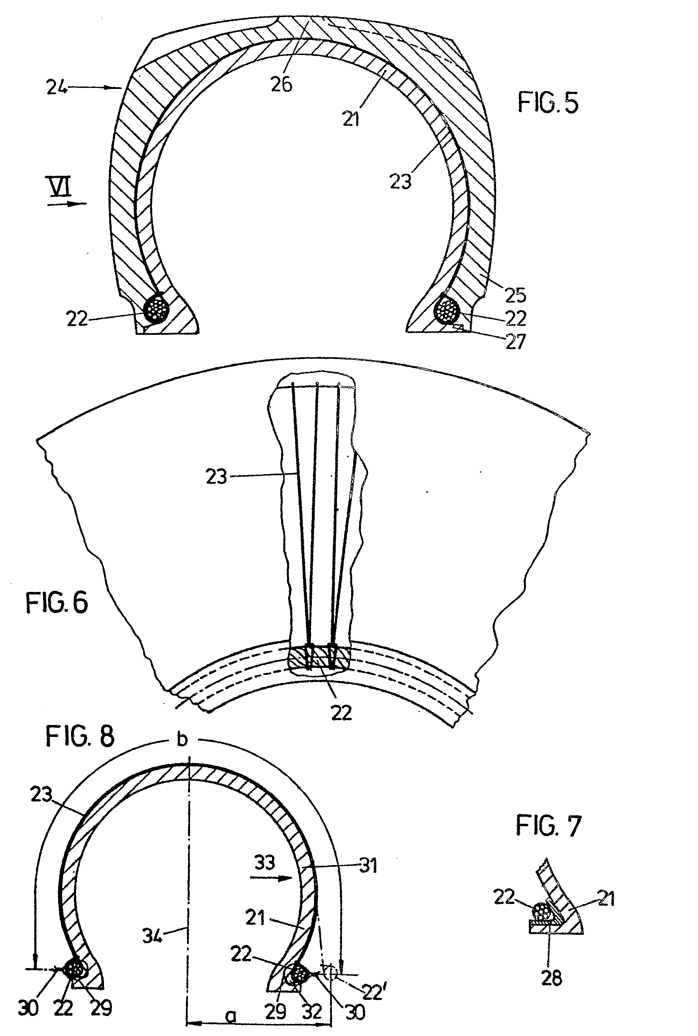

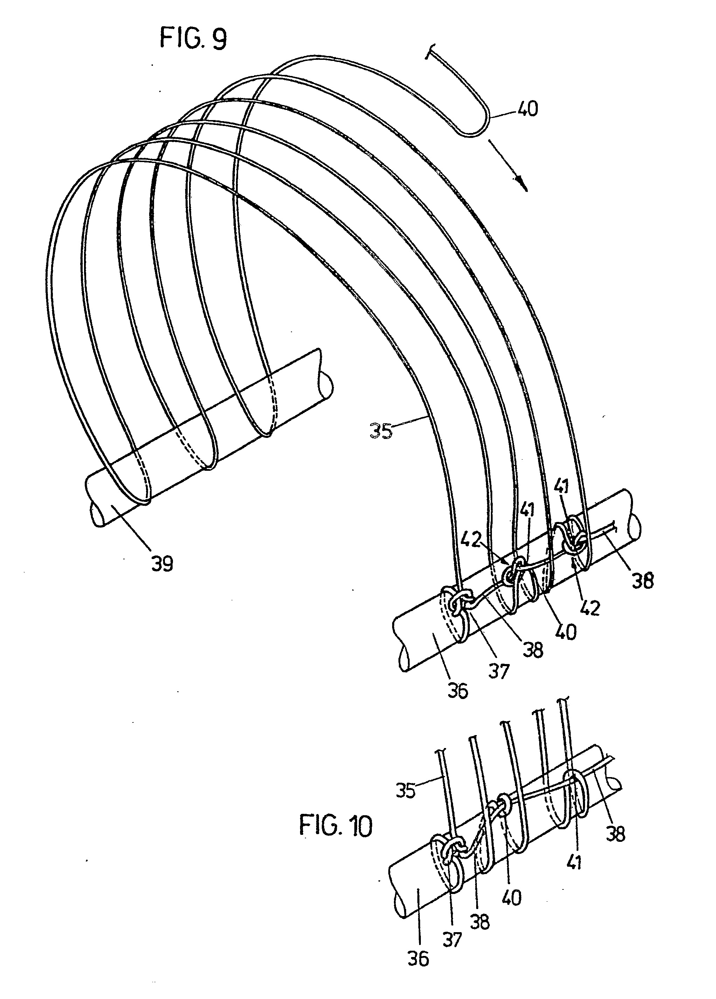

Die Erfindung ist nachfolgend an Hand von in der Zeichnung dargestellten Ausführungsbeispielen näher erläutert. In dieser zeigen Fig. 1 einen Querschnitt durch einen auf die erfindungsgemässe Weise hergestellten Reifen, Fig. 2 eine perspektivische Darstellung des Verlaufes des Kordes oder des Seiles, wobei zur Erhöhung der Übersichtlichkeit der Formkern weggelassen wurde, sowie eine schematische Darstellung der Kompensationsvorrichtung, Fig. 3 und 4 zwei Querschnitte von für das Verfahren geeigneten Formkernen, Fig. 5 einen Querschnitt durch einen mit dem erfindungsgemässen Verfahren hergestellten Reifen, Fig. 6 eine Ansicht der Fig. 5, teilweise aufgeschnitten, in Richtung des Pfeiles VI, Fig. 7 einen Teilabschnitt des Reifeninnenkörpers analog der Darstellung der Fig. 5 vor Einbringen der Armierungsglieder mit eingelegten Abstandhaltern. Fig. 8 eine schematische Darstellung der Wulstkerne, bei welcher ein Umschlingen der Wulstkerne in Abstand von der Aussenfläche des Reifeninnenkörpers ermöglicht ist, Fig. 9 eine perspektivische Ansicht einer weiteren Art der Festlegung von Seil oder Kord an Wulstkernen, und Fig. 10 eine Variante der Festlegung des Kordes oder Seiles an einem Wulstkern, in Seitenansicht.

In Fig. 1 ist mit 1 der Formkern bezeichnet. Die Karkasse wird von einem um die Wulstkerne 2 herumgeführten Kord oder Seil 3 gebildet. Im Querschnitt des Reifens 4 sind unterhalb der Lauffläche im Umfangsrichtung verlaufende Armierungen 5 angedeutet. Die Lauffläche ist mit 6 bezeichnet.

In Fig. 2 ist schematisch angedeutet, wie der Kord oder das Seil 3 von einer Vorratsspule 7 abgezogen und über eine Rollenanordnung 8, 9, 10 geführt wird. Diese Rollenanordnung 8, 9, 10 dient der Konstanthaltung der Spannung des Kordes oder Seiles 3, wobei die mittlere Rolle 9 von einem Gewicht 11 belastet ist. Bei feststehender Vorratsspule 7 wird die mittlere Rolle 9 bei gleichzeitigem Abzug von Kord oder Seil in Richtung des Pfeiles 12 nach oben wandern und hiebei die Grenzschalter 13 und 14 betätigen. Bei Betätigung des Grenzschalters 13 wird die Bremsvorrichtung 15 die Bewegung der Vorratsspule 7 freigeben und die Rolle 9 kann wieder bis zum Grenzschalter 14 absinken, welcher die Bremsvorrichtung 15 wiederum einschaltet. Der Kord 3 ist um die Wulstkerne 2 unter Ausbildung von Schlingen 16 herumgeführt und die Verbindung des Kords 3 mit diesen Wulstkernen erfolgt nach Art eines Häkelvorganges. Der Kord 3 wird, wie sich aus dem letzten dargestellten Schritt ergibt, vom linken Wulstkern 2 über die Peripherie des nicht gezeigten Reifeninnenkörpers herumgeführt und durch die um den rechten Wulstkern 2 herumgeführte und beim vorangehenden Schritt ausgebildete Schlinge hindurchgeführt, worauf neuerlich eine Schlinge ausgebildet wird, durch welche der Kord nachdem er über die Peripherie des Reifeninnenkörpers zur anderen Seite geführt und durch die Schlinge 16 am linken Wulstkern 2 hindurchgeführt ist und nach der neuerlichen Führung über die Peripherie des Reifeninnenkörpers durchtreten kann.

Der Formkern kann hiebei wie in Fig. 3 dargestellt, an seiner Peripherie in Umfangsrichtung verlaufende Rippen 17 aufweisen, um die Karkasse in Abstand von der Innenkontur 18 des Formkerns zu halten. Die verbleibenden Zwischenräume können beispielsweise beim Herstellen eines aus Polyurethan gegossenen Reifens mit der Giessmasse ausgefüllt werden.

Die Ausbildung kann aber auch wie in Fig. 4 dargestellt, so getroffen sein, dass an dem Formkern 1 eine Hülle 19 angeordnet ist, welche Rippen 20 aufweist. Als Material für diese Hülle 19 kommt in einfacher Weise ein dem Reifenmaterial entsprechendes Material, beispielsweise Polyurethan, in Frage. Diese Hülle 19 bildet den Reifeninnenkörper.

In Fig. 5 ist mit 21 der Reifeninnenkörper dargestellt. Der Reifeninnenkörper ist aus Polyurethan gegossen. Die Wulstkerne 22 sind von Seilen oder Korden 23 umgriffen. Der Reifen 24 wird durch Aufbringen der Reifenseitenwandteile 25 und der Lauffläche 26 vervollständigt. Die Wulstkerne 22 sind in Aufnahmeprofilen 27 des Reifeninnenkörpers 21 angeordnet und die Seile oder Korde 23 sind, wie in Fig. 6 verdeutlicht ist, abwechselnd um die beiden Wulstkerne 22 zu beiden Seiten des Reifeninnenkörpers 21 herumgeführt. Der Wulstkern 22 ist hiebei wie üblich von einem in sich geschlossenen verwundenen Stahlseil gebildet und die Seile oder Korde 23 sind von Kunststoffseilen oder Drähten gebildet. Die Seile oder Korde 23 verlaufen hiebei von einem Wulstkern 22 ausgehend über die Peripherie des Reifeninnenkörpers zum anderen Wulstkern 22 und werden von diesem wiederum zum ersten Wulstkern 22 zurückgeführt. Die Befestigung der Seile oder Korde 23 an den Wulstkernen 22 erfolgt in der in Fig. 2 beschriebenen Weise nach Art eines Häkelvorganges. Es kann aber auch eine Befestigung gewählt werden, wie sie nachstehend in Fig. 9 beschrieben wird.

In Fig. 7 sind zwischen den Wulstkernen 22 und dem Reifeninnenkörper 21 Abstandhalter 28 dargestellt, welche immer dann, wenn die Seile oder Korde 23 beim Umgreifen der Wulstkerne 22 an diese Abstandhalter 28 herankommen, herausgezogen werden.

In Fig. 8 ist der Wulstkern 22 in seiner am Reifeninnenkörper 21 anliegenden Lage sowie in einer Lage 22' dargestellt. Der Wulstkern 22 ist in radialer Richtung nicht oder nur sehr gering aufweitbar und der Abstand a des Wulstkernes in der Lage 22' von der Reifenlängsmittelebene ist so bemessen, dass die Länge der Armierungsglieder b ausgehend vom Wulstkern 22 zur einen Seite des Reifeninnenkörpers 21 bis zur Lage 22' des Wulstkernes zur anderen Seite des Reifeninnenkörpers 21 identisch ist dem Abstand zwischen den Wulstkernen 22, d.h. wenn beide Wulstkerne an der Aussenseite des Reifeninnenkörpers anliegen. In Fig. 8 sind weiters Verankerungsglieder 29 dargestellt, welche beim Giessen des Reifeninnenkörpers 21 in das Material des Reifeninnenkörpers 21 eingebettet werden. Die beiden Enden der Verankerungsglieder 29 werden beispielsweise durch Knoten 30 unter Einschliessung der Wulstkerne 22 verbunden, wodurch die Wulstkerne 22 in ihrer Anlagestellung an den Reifeninnenkörper gehalten werden. Die Wulstkerne 22 werden vom Seil oder Kord 23 vollständig umschlungen.

Die Durchführung des Verfahrens, wie es schematisch in Fig. 8 dargestellt ist, ist selbstverständlich nur dann möglich, wenn der Innenkörper 21 in einem Bereich 31 mit grösserem Radius als dem Bereich 32, in welchen das Aufnahmeprofil für den Wulstkern 22 vorgesehen ist, seitlich über den Bereich 32 in Richtung des Pfeiles 33 vorgewölbt ist. Nur unter dieser Bedingung ist nämlich ein Abstand a von der Längsmittelebene 34 des Reifeninnenkörpers auffindbar, welcher der Bedingung genügt, dass die Länge b des Seiles oder Kordes 23 identisch ist der Länge des Seiles oder Kordes zwischen den beiden Wulstkernen 22 im an der Aussenseite des Reifeninnenkörpers 21 festgelegten Zustand.

Das Verfahren kann in einfacher Weise so durchgeführt werden, dass ein Seil oder Kord in Form einer Schlinge zwischen der Aussenseite des Reifeninnenkörpers 21 und dem Wulstkern 22 hindurchgeführt und um den Wulstkern 22 herumgeführt wird, worauf das freie Ende des Seiles oder Kordes 23 durch die Schlinge hindurchgesteckt wird.

Fig. 9 zeigt eine Variante der Befestigung des Kordes oder Seiles an den Wulstkernen, welche einem Näh- oder Webvorgang mit Schuss, entspricht. Hiedurch ergibt sich jeweils ein Knoten um den Wulstkern. Der Kord oder das Seil 35 wird an einem ersten Wulstkern 36 bei 37 mit einem Doppelknoten derart befestigt, dass ein langes freies Ende 38 verbleibt. Der Kord oder das Seil 35 wird daraufhin über die Peripherie des nicht gezeigten Reifeninnenkörpers oder Formkernes zum anderen Wulstkern 39 herumgeführt.

Mit dem Kord oder Seil 35 wird eine Schlaufe 40 geformt, die unter dem Wulstkern 39 durchgezogen wird, anschliessend über die Peripherie des Reifeninnenkörpers oder des Formkernes zum ersten Wulstkern 36 geführt und von der Innenseite, das ist die dem Reifeninnenkörper oder dem Formkern benachbarte Seite des Wulstkernes 36 um diesen soweit geschlungen, bis die Schlaufe 40 auf gleiche Höhe mit dem Doppelknoten 37 ist. Der Scheitel 41 der Schlaufe 40 wird mit dem freien Ende 38 des Kordes oder Seiles 35 mittels eines Knotens 42 an dem Wulstkern 36 festgelegt.

Mit dem Kord oder Seil 35 wird beim Wulstkern 39 erneut eine Schlaufe 40 gebildet, welche wieder über die Peripherie des Reifeninnenkörpers zum ersten Wulstkern 36 gezogen wird. Diese erneute Schlaufe 40 wird von der Aussenseite, das ist die dem Reifeninnenkörper oder dem Formkern abgewandte Seite des Wulstkernes 36, um den Wulstkern 36 geschlungen, bis die Schlaufe 40 auf gleicher Höhe mit der vorherigen Schlaufe bzw. dem Doppelknoten 37 ist. Der Scheitel 41 der zuletzt genannten Schlaufe 40 wird wieder mit dem freien Ende 38 des Kordes oder Seiles 35 mittels eines Knotens 42 am Wulstkern 36 festgelegt.

Die weiteren vom Wulstkern 39 zum Wulstkern 36 gezogenen Schlaufen 40 werden abwechselnd von der Innenseite und der Aussenseite des Wulstkernes 36 um diesen geschlungen. Dies erfolgt solange, bis der ganze Umfang des Reifeninnenkörpers mit Kord oder Seil 35 umschlungen ist.

Die Vorspannung des Kordes oder Seiles 35 kann in einfacher Weise durch stärkeres oder schwächeres Ziehen des freien Endes 38 beeinflusst werden.

Fig. 10 zeigt eine Variante zu der in Fig. 9 gezeigten Festlegung des Kordes oder Seiles 35 an den Wulstkern 36. Es wird wiederum die Schlaufe 40 abwechselnd von der Innenseite und der Aussenseite des Wulstkernes 36 um denselben geschlungen. Abweichend zu der Ausführung nach Fig. 9, erfolgt die Festlegung der Schlaufen 40 nicht mit einem Knoten, sondern durch einfaches Hindurchziehen des freien Endes 38 durch die Schlaufe 40. Auch hier kann die Vorspannung des Kordes oder Seiles 35 in einfacher Weise durch stärkeres oder schwächeres Ziehen des freien Endes 38 beeinflusst werden.

## Patentansprüche

1. Verfahren zur Herstellung von Pneumatikreifen (4; 24) aus Kunststoffelastomeren, insbesondere aus Polyurethan, mit einem Reifeninnenkörper (21), einer über Wulstkerne (2; 22; 36, 39) im Reifen verankerten Karkasse, einer Gurteinlage (5) und einem Reifenaussenkörper (25) mit einer Lauffläche (6; 26) dadurch gekennzeichnet, dass die Karkasse durch Wickeln von Kord oder Seil (3, 23, 35) radial von einem Wulstkern (2; 22; 36, 39) zum anderen Wulstkern über die Peripherie eines Formkerns (1) in Abstand von der Oberfläche des Formkerns unter abwechselndem Verankern des Kordes oder Seiles (3, 23, 35) an wenigstens einem der zu beiden Seiten des Reifens angeordneten Wulstkerne (2, 22, 36) durch vollständige Umschlingung derselben ausgebildet wird, wobei das Seil oder Kord um den jeweiligen Wulstkern (2) unter Ausbildung einer Schlinge (16) herumgeführt wird, und das jeweils in Abstand von der Oberfläche des Formkernes über die Peripherie desselben geführte Seil oder Kord (3) unter Ausbildung einer neuen Schlinge (16) durch die zuvor gebildete banachbarte Schlinge (16) nach Art des Häkelns hindurchgeführt und mit dem jeweiligen Wulstkern (2) verbunden wird, dass eine in Umfangsrichtung verlaufende Gurteinlage (5) aufgebracht und dass abschliessend der Reifenaussenkörper und die Lauffläche (6) aufgebracht wird.

2. Verfahren nach Anspruch 1, dadurch gekennzeichnet, dass das Seil oder das Kord (3) zur Erzielung einer Radialarmierung unter konstanter Spannung von einem Wulstkern (2) zum anderen in Abstand von der Oberfläche des Formkernes oder über die Peripherie des Reifeninnenkörpers (21) geführt und der Formkern bzw. der Reifeninnenkörper (21) nach jeder Verankerung des Seiles oder Kordes (3) an dem jeweiligen Wulstkern (2; 22; 36) in Umfangsrichtung vorgeschoben wird.

3. Verfahren nach Anspruch 1 oder 2, dadurch gekennzeichnet, dass die Wulstkerne (22) während der Aufbringung der Radialarmierung (23) in Abstand von der Aussenfläche des Reifeninnenkörpers (21) gehalten werden.

4. Verfahren nach einem der Ansprüche 1 bis 3, bei welchem der Innenkörper (21) seitlich in einem Bereich mit grösserem Radius als dem des Bereiches der Anordnung der Wulstkerne (22) über die Aufnahmestelle des Wulstkernes vorgewölbt ist, dadurch gekennzeichnet, dass wenigstens ein Wulstkern (22) zunächst in einem Abstand von der Aussenfläche des Innenkörpers angeordnet wird, in welchem die kürzeste Verbindung über die Peripherie des Reifeninnenkörpers (21) zum anderen Wulstkern (22) gleich lang ist wie die kürzeste Verbindung der Wulstkerne (22) über die Peripherie des Reifeninnenkörpers (21) im an der Aussenseite des Reifeninnenkörpers festgelegten Zustand derselben, und dass hierauf die Wulstkerne (22) nach Umschliessen durch das Seil oder Kord (23) an der Aussenseite des Reifeninnenkörpers (21) festgelegt werden.

Verfahren nach einem der Ansprüche 1 bis 4, dadurch gekennzeichnet, dass das Seil oder Kord (35) ausgehend von einem Wulstkern (39) unter Ausbildung einer Schlinge (40) zum anderen Wulstkern (36) geführt wird, dass die Schlinge (40) um den anderen Wulstkern (36) herumgeführt und ein freies Ende (38) des Seiles oder Kordes (35) unter Ausbildung eines Knotens (42) durch die Schlinge (40) hindurchgesteckt wird und das dieses Verfahren bis zur Rückkehr an den Ausgangspunkt über den Umfang des Wulstkernes durchgeführt wird, worauf gegebenenfalls vorstehende Enden des Seiles oder Kordes abgeschnitten werden.

6. Verfahren nach einem der Ansprüche 1 bis 5, dadurch gekennzeichnet, dass die in Umfangsrichtung verlaufende Gurteinlage (5) als in sich geschlossener vorgefertigter Gurtring eingebracht wird.

7. Verfahren nach einem der Ansprüche 1 bis 5, dadurch gekennzeichnet, dass die in Umfangsrichtung verlaufende Gurteinlage (5) durch Umwicklung mit Seil oder Kord hergestellt wird.

8. Verfahren nach einem der Ansprüche 1 bis 7, dadurch gekennzeichnet, dass der Reifeninnenkörper mit ringförmig verlaufenden Erhebungen (17; 20) ausgebildet wird.

## Claims

1. A method for manufacturing vehicle tyres (4; 24) made of elastomeric plastics, particularly of polyurethane, said tyres comprising an inner tyre (21), a carcass secured within the tyre by bead cores (2; 22; 36, 39), a circumferential reinforcement (5), and an outer jacket (25) having the tread surface (6; 26), the said method being characterized in that the carcass is formed by winding radially a cord or rope (3, 23, 35) from one bead core (2; 22; 36, 39) to the other bead core across the periphery of a forming core (1) but distantly from the surface of the same, said cord or rope being secured alternately on at least one of the two bead cores (2, 22, 36) provided on both sides of the tyre whereas the cord or rope is wound completely round the bead core thus originating a loop; and in that the cord or rope (3) laid distantly across the periphery of the forming core is led through the previously made neighbour loop (16) as in crochet-work, to form a new loop (16) and to build up a connection with the bead core (2); in that a reinforcement member (5) is embedded circumferentially; and in that finally are applied the outer jacket and the tread (6).

2. The method according to claim 1, further characterized in that the cord or rope (3) is led under a constant tension from one bead core (2) to the other one, distantly from the forming core's (1) surface or over the inner tyre's (21) periphery in order to get a radial reinforcement, and in that the forming core (1) or the inner tyre (21), resp., is fed in circumferential direction each time after the cord or rope has been newly linked on the bead core (2, 22, 36).

3. Method according to claim 1 or 2, characterized in that the bead cores (22) are retained in a distance from the outer surface of the inner tyre (21) whilst the radial reinforcement (23) is applied.

4. Method according to claim 1, 2 or 3, wherein the inner tyre (21) protrudes in a certain region beyond the receiving region of the bead core (22) with a radius which is greater than in the region where the bead cores are placed, the said method being characterized in that at least one bead core (22) is placed in the first instance in such a distance from the outer surface of the inner tyre where the shortest connection to the other bead core existing around the periphery of the inner tyre has the same length as the shortest distance between the bead cores (22) measured around the periphery of the inner tyre (21) in their condition stated at the outer face of the inner tyre, and in that thereafter the bead cores (22) are fixed at the outer side of the inner tyre (21) after being surrounded by the cord or rope.

5. Method according to anyone of the claims 1 to 4, characterized in that the cord or rope (35) is led from one bead core (39) to the other one (36) whereby a loop (40) is formed, in that the said loop (40) is led around the other bead corse (36), in that a free end (38) of the cord or rope (35) is drawn through the said loop (40) forming thus a knot, and in that these proceedings are continued until they reach the starting point past the bead core's total length, and in that, if the case may be, the protruding ends of the cord or rope are cut off.

6. Method according to anyone of the preceding claims, characterized in that the circumferential reinforcement (5) is embedded as a pre-fabricated reinforcement ring.

7. Method according to anyone of the claims 1 to 5, characterized in that the circumferential reinforcement (5) is produced by wrapping with cord or rope.

8. Method according to anyone of the preceding claims, characterized in that the inner tyre is provided with ring-like protrusiones (17; 20).

## Revendications

1. Procédé de fabrication de bandages pneumatiques (4, 24) en élastomères synthétiques, notamment en polyuréthane, avec un corps intérieur de bandage (21), une carcasse ancrée dans le bandage au moyen de tringles (2, 22, 36, 39), une nappe de ceinture (5) et un corps extérieur de bandage (25) pourvu d'une bande de roulement (6, 26), caractérisé en ce que la carcasse est réalisée par enroulement de corde ou de câblé (3, 23, 35) dans le sens radial et d'une tringle (2, 22, 36, 39) à l'autre, sur la périphérie d'un noyau de formage (1) et à une certaine distance de la surface de celui-ci, la corde ou le câblé (3, 23, 25) étant alternativement ancré à l'une au moins des tringles (2, 22, 36) disposées de chaque côté du bandage en embrassant complètement ces tringles, le câblé ou la corde étant passé autour de la tringle correspondante (2) avec formation d'une boucle (16), et en ce que le câble ou la corde (3) mené chaque fois a une certaine distance de la surface du noyau de formage au-dessus de la périphérie, est passé, avec formation d'une nouvelle boucle (16), à travers la boucle voisine (16) qui vient d'être formée à la façon du travail au crochet, tout en étant relié à la tringle correspondante, en ce qu'une nappe de ceinture est mise en place dans le sens périphérique et en ce qu'ensuite sont mis en place le corps extérieur de bandage et al bande de roulement (6).

2. Procédé suivant la revendication 1, caractérisé en ce qu'en vue d'obtenir une armature radiale, le câble ou la corde (3) est mené sous tension constante de l'une des tringles (2) à l'autre à une certaine distance de la surface du noyau de formage ou sur la périphérie du corps intérieur du bandage (2) et en ce que le noyau de formage ou le corps intérieur de bandage (21) est déplacé périphériquement après chaque ancrage du câblé ou de la corde (3) sur la tringle (2, 22, 36) correspondante.

3. Procédé suivant la revendication 1 ou 2, caractérisé en ce que les tringles (22) sont maintenues écartées de la surface extérieure du corps intérieur de bandage (21) au cours de la mise en place de l'armature radiale (23).

4. Procédé suivant l'une des revendication 1 à 3 au cours duquel le corps intérieur (21) est latéralement déformé dans une zone de rayon plus grand que celui de la zone dans laquelle les tringles (22) sont placées au-delà de la position de montage de la tringle, caractérisé en ce que tout d'abord au moins une tringle (22) est disposée à une certaine distance de la surface extérieure du corps intérieur, distance pour laquelle le chemin le plus court par-dessus la périphérie du corps intérieur du bandage (21) vers l'autre talon (22) est égal au chemin le plus court par-dessus la périphérie du corps intérieur de bandage (21) entre les tringles dans leur position déterminée à la surface extérieure du corps intérieur de bandage et en ce qu'ensuite les tringles (22) sont fixées dans la surface extérieure du corps intérieur de bandage (21) après que le câblé ou la corde les aient embrassé.

5. Procédé suivant les revendications 1 à 4, caractérisé en ce que le câblé on la corde (35) est passé avec formation d'une boucle (40) d'une tringle (39) vers l'autre tringle (36), la boucle (40) étant passée autour de cette autre tringle (36), une extrémité libre (38) du câblé ou de la corde (35) étant passée à travers la boucle (40) avec formation d'un nœud (42), et en ce que ce processus est exécuté jusqu'au retour vers le point de départ par-dessus la surface périphérique de la tringle, des parties dépassantes du câblé ou de la corde étant, le cas échéant, coupées.

6. Procédé suivant les revendications 1 à 5, caractérisé en ce que la nappe de ceinture (5) s'étendant dans le sens périphérique est mise en place sous la forme d'un anneau de ceinture fermé préparé à l'avance.

7. Procédé suivant l'une des revendications 1 à 5, caractérisé en ce que la nappe de ceinture (5) s'étendant dans le sens périphérique est réalisée par enroulement de câblé ou de corde.

8. Procédé suivant l'une des revendications 1 à 7, caractérisé en ce que le corps intérieur de bandage est pourvu de nervures annulaires (17, 20).

FIG. 1

5    6    5

4

3

1

2    2

FIG. 3    17

18

17

18

FIG. 4

19

20

1

20

FIG. 2

FIG.5

FIG.6

FIG.8

FIG.7

FIG. 9

FIG. 10